# EUROPÄISCHE PATENTANMELDUNG

(11) **EP 1 536 108 A1**
(43) Veröffentlichungstag der Anmeldung: **01.06.2005**
(21) Anmeldenummer: 03026895.7
(22) Anmeldetag: 24.11.2003
(51) Int. Cl.: F01L 9/04, F16K 31/02, F15C 5/00, F16K 31/06

(54) **Linearventilantrieb**

(71) Anmelder: SIEMENS AKTIENGESELLSCHAFT, 80333 München (DE)
(72) Erfinder: Egener, Ernst-Guenter, 45472 Muelheim A.D. Ruhr (DE); Logar, Andreas, 45527 Hattingen (DE)

(57) **Zusammenfassung**

Die Erfindung betrifft eine Vorrichtung und eine Verfahren zur Steuerung eines Ventilhubs eines Ventils, das eine Ventilstange (5) und einen Ventilkolben (3) umfasst, wobei der Ventilkolben (3) über die über die Ventilstange (5) mit einem Linearantrieb (6) bewegt wird, der als Linearmotor ausgebildet sein kann.

## Beschreibung

Die Erfindung betrifft eine Vorrichtung und ein Verfahren zur Steuerung eines Ventilhubs eines Ventiles, das eine Ventilstange und einen Ventilkolben umfasst.

Für die im Dampfturbinenbau auftretenden Strömungsvolumina des Dampfes, werden an die Ventile besondere Anforderungen gestellt. Die Ventile bestehen hierbei, vereinfacht dargestellt, aus einem äußeren Ventilgehäuse und einem Ventilkolben. Der Ventilkolben kann bei den auftretenden Strömungsvolumina ein Gewicht von bis zu einer Tonne betragen.

In der DE 198 12 674 wird ein elektromechanischer Stellantrieb für ein Ventil für eine Dampfturbine beschrieben. Hierbei wird über ein Elektromotor eine rotierende Bewegung über Umlenkstangen eine Kraft auf einer Ventilhubstange übertragen, die schließlich derart ausgebildet ist, dass eine Kraft in einer linearen Richtung übertragen wird. Dieses Ventil weist eine Kupplung auf, die dazu dient, über eine Vorrichtung eine vorgespannte Feder zu lösen, was im Falle eines Schnellschlusses des Ventils benötigt wird. Ein Schnellschluss wird z.B. dann benötigt, wenn eine Störung auftritt und die Dampfturbine schnell abgeschaltet werden muss, was durch ein schnelles Schließen des Hauptströmventils erfolgen kann. Durch die Umsetzung der rotierenden in eine lineare Bewegung entstehen naturgemäß Verluste auf.

Die EP 3 129 140 beschreibt einen elektrohydraulischen Antrieb mit integrierter Ölversorgung. Hierbei wird eine Kraft durch einen Druckaufbau der über Hydraulikpumpen an ein Öl übertragen wird, erreicht. Der Einsatz eines Hydrauliköls birgt natürlich die Gefahr, dass ein Brand ausbrechen könnte, da in Dampfturbinen hohe Temperaturen auftreten und die hydraulische Einrichtung für den Antrieb ein Leck aufweisen könnte.

Aufgabe der vorliegenden Erfindung ist es, eine Vorrichtung zur Steuerung eines Ventilhubs eines Ventils anzugeben, bei dem keine großen mechanischen Belastungen und die Gefahr eines Brandes verringert ist.

Eine weitere Aufgabe dieser Erfindung ist es, ein Verfahren zur Steuerung eines Ventilhubs anzugeben mit den vorgeschriebenen Zielen.

Die auf die Vorrichtung hin gerichtete Aufgabe, wird gelöst durch eine Vorrichtung zur Steuerung eines Ventilhubs eines Ventils, das eine Ventilstange und einen Ventilkolben umfasst, wobei der Ventilkolben über die Ventilstange mit einem Linearantrieb gekoppelt ist und der Linearantrieb ausgebildet ist, zum Übertragen einer Ventilkolbenhub-Kraft auf den Ventilkolben über die Ventilstange.

Die auf das Verfahren hin gerichtete Aufgabe, wird gelöst durch ein Verfahren zur Steuerung eines Ventilhubs eines Ventils, das eine Ventilstange und einen Ventilkolben umfasst, wobei der Ventilkolben über die Ventilstange mit einem Linearantrieb bewegt wird.

Ein Vorteil besteht unter anderem darin, dass eine mechanische Belastung wie z.B. bei der Umsetzung von rotierenden Bewegungen in Linearbewegungen auftreten gänzlich vermieden wird. Dadurch entstehen weniger Reibverluste, es wird weniger Bauraum benötigt und führt dadurch zu einer günstigeren Bauweise.

Ein weiterer Vorteil ist, dass die Gefahr eines Brandes durch die gänzliche Vermeidung von Hydrauliköl minimiert wird.

Ein weiterer Vorteil ist, dass der Linearantrieb derart ausgebildet wird, dass für einen Schnellschluss keine zusätzlichen Bauteile bzw. Komponenten benötigt werden.

In einer vorteilhaften Weitergestaltung wird deswegen der Linearantrieb als ein elektromotorischer Linearantrieb ausgebildet. Darüber hinaus kann der Linearantrieb in einer weiteren vorteilhaften Weitergestaltung der Erfindung als Linearmotor ausgebildet werden.

Zweckmäßigerweise wird eine Ventilkolbenhubkraft, die von er Vorrichtung herrührt im wesentlichen parallel zur einer Ausdehnungsrichtung der Ventilstange. Es wird hierbei gänzlich der Vorteil ausgenutzt, dass der Linearmotor gerade die translatorische Bewegungen liefert, die für die Bewegungen des Ventilkolbens benötigt wird. Es wird bewusst keine Umsetzung einer rotierenden Komponente in eine translatorische Komponente erfolgt.

Anhand der nachfolgenden Beschreibung werden Ausführungsbeispiele der Erfindung unter Bezugnahme auf die Zeichnungen noch näher erläutert. Dabei zeigen:
- Fig. 1: eine perspektivische Darstellung eines Ventiles;
- Fig. 2: eine Darstellung eines Ventiles im Längsschnitt.

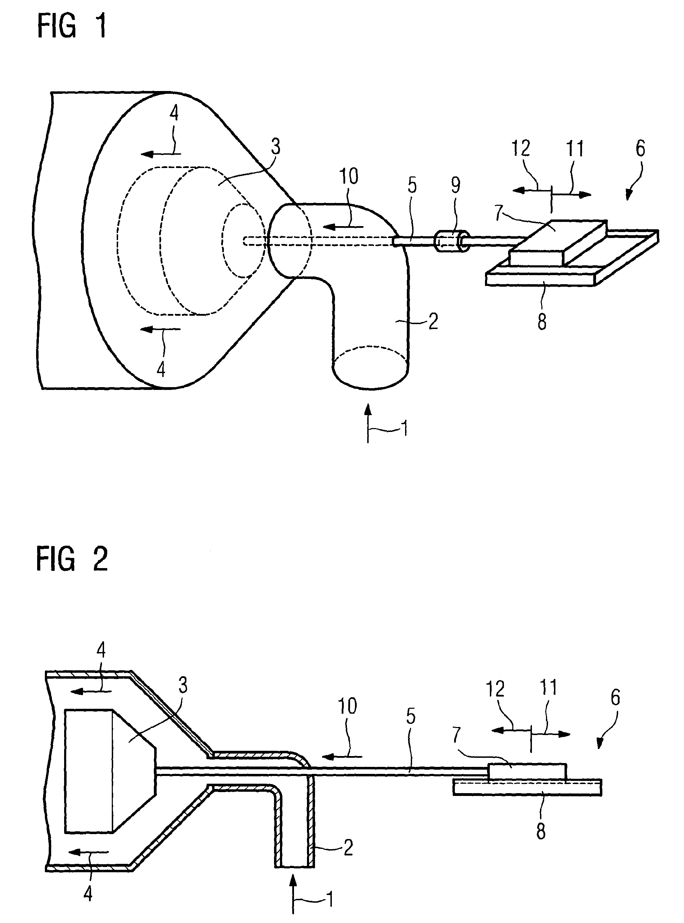

In Figur 1 ist eine perspektivische Darstellung eines Ventiles zu sehen. Ein Strömungsmedium strömt in einer Strömungsrichtung 1 über ein Heißdampfrohr 2 zu einem Ventilkolben 3. In geöffneter Stellung des Ventils strömt das Strömungsmedium am Ventilkolben 3 vorbei weiter in eine zweite Strömungsrichtung 4. Das Strömungsmedium gelangt dann zu diversen Leit- und Laufschaufelstufen einer Turbine.

Der Ventilkolben ist über eine Ventilstange 5 an einem Linearantrieb 6 befestigt. Der Linearantrieb umfasst ein Primärteil 7 und ein Sekundärteil 8. Das Sekundärteil 8 ist in nicht dargestellter Weise an eine Vorrichtung gehaltert.

Das Primärteil 7 ist mit der Ventilstange 5 verbunden. Die Ventilstange 5 wird in einem Lager 9 gelagert. Der Übersichtlichkeit wegen ist hier in der Fig. 1 lediglich ein Lager 9 eingezeichnet. In einer Ausdehnungsrichtung 10 werden weitere Lager eingebaut.

Der Linearantrieb 6 wird als ein elektromotorischer Linearantrieb ausgebildet. Genauso kann der Linearantrieb 6 als Linearmotor ausgebildet werden.

Das Primärteil 7 bewegt sich unter Energiezufuhr auf dem Sekundärteil 8 in Richtung der Ausdehnungsrichtung 10. Das Primärteil 7 bewegt sich dabei entweder in Schließrichtung 11 oder in Öffnungsrichtung 12. Die Schließrichtung 11 und die Öffnungsrichtung 12 sind parallel zur Ausdehnungsrichtung 10.

In der Figur 2 ist im Längsschnitt die Vorrichtung zur Steuerung des Ventilhubs eines Ventiles dargestellt. Der Linearantrieb funktioniert nach dem Funktionsprinzip eines Synchronmotors.

Die Funktionsweise des Linearantriebs ist derart, dass im Falle eines Schnellschlusses, d.h. bei Auftreten einer Störung muss das Ventil schnell geschlossen werden, durch entsprechende Energiezufuhr das Primärteil mit der gewünschten Geschwindigkeit den Ventilkolben 3 in Schließrichtung 11 bewegt. Eine Vorrichtung mit z.B. vorgespannten Federn oder ähnliches wird hierbei nicht benötigt.

## Patentansprüche

1. Vorrichtung zur Steuerung eines Ventilhubs eines Ventils, das eine Ventilstange (5) und einen Ventilkolben (3) umfasst,
**dadurch gekennzeichnet, dass** der Ventilkolben (3) über die Ventilstange (5) mit einem Linearantrieb (6) gekoppelt ist und der Linearantrieb (6) ausgebildet ist zum Übertragen einer Kraft auf den Ventilkolben (3) über die Ventilstange (5).

2. Vorrichtung nach Anspruch 1,
**dadurch gekennzeichnet, dass** der Linearantrieb (6) als elektromotorischer Linearantrieb ausgebildet ist.

3. Vorrichtung nach Anspruch 1 oder 2,
**dadurch gekennzeichnet, dass** der Linearantrieb (6) als Linearmotor ausgebildet ist.

4. Vorrichtung nach einem der Ansprüche 1 - 3,
**dadurch gekennzeichnet, dass** die Ventilkolbenkraft im wesentlichen parallel zu einer Längsrichtung der Ventilstange wirkt.

5. Verwendung der Vorrichtung in einer Strömungsmaschine.

6. Verfahren zur Steuerung eines Ventilhubs eines Ventils, das eine Ventilstange (5) und einen Ventilkolben (3) umfasst,
**dadurch gekennzeichnet, dass** der Ventilkolben (3) über die Ventilstange (5) mit einem Linearantrieb (6) bewegt wird.
